# EUROPEAN PATENT APPLICATION

(11) **EP 3 617 302 A1**
(43) Date of publication of application: **04.03.2020**
(21) Application number: 19193905.7
(22) Date of filing: 27.08.2019
(51) Int. Cl.: C12G 1/02

(54) **FERMENTATION METHOD AND APPARATUS**

(30) Priority: 28.08.2018 IT 201800008209
(71) Applicant: Noform S.r.l., 30020 Meolo (VE) (IT)
(72) Inventor: CROSATO, REMO, 30020 MEOLO (IT)
(74) Representative: Citron, Massimiliano

(57) **Abstract**

To improve the treatment of a vegetable product in the form of crushed material, a method is described comprising the step of pumping by means of a peristaltic pump (68) gas generated by the fermentation of the vegetable product.

## Description

The invention concerns a fermentation method and an apparatus adapted to implement the method. Although the invention is useful for the treatment of any vegetable product, in particular in the form of a crushed product, the following description will refer by way of example to winemaking, a field in which the invention has proven particularly effective.

Winemaking takes place with the help of special tanks, wherein the must is introduced to ferment. The fermentation process generates a large amount of gaseous products, especially CO₂, that participate actively to the success of a good wine. The gases are released from the must and push the marc and every solid part upwards where they are compacted and form a solid layer, called "cap".

Winemaking methods adequately exploit fermentation gases. WO 20061087601 describes a winemaking storage tank that controls its inner gas pressure. In WO 98145403 the gases are used to stir the cap and prevent it from solidifying. In EP 20 58 384 fermentative gas is accumulated under pressure in an auxiliary cell and after having reduced the gas pressure in the main tank, the cell is connected to the tank at a point under the cap so that, thanks to the pressure differential between the two, spontaneous pouring off of gaseous products takes place in the liquid mass, so that while rising they strike the cap.

The object of the present invention is to present a method and an apparatus for the treatment of a vegetable product, e.g. in the form of a crushed product, preferentially must, which improves this state of the art.

Such object is achieved by a method as claimed in Claim 1. The preferred variants, single or combined, of the method are listed in the dependent method claims.

The method comprises the step of pumping by means of a peristaltic pump gas generated by the fermentation of the vegetable product.

The gas can thus be stored (e.g. in tanks or cylinders or a generic container), for future use, or re-used in real time during fermentation or winemaking by moving it by means of the peristaltic pump along proper ducts from one volume to another.

By *peristaltic pump* it is meant a device comprising
a rotor provided with a plurality of rollers, and
a flexible tube, inside which the gas to be pumped can flow, which forms a ring around the rotor. The rollers and the ring are mounted so that the former, when the rotor rotates, create on the latter a squeezed or choked tube portion that runs along the ring.

The advancement of the squeezed or choked portion along the tube ring determines the thrust of the gas and its pumping.

Note that e.g. in the enological field the peristaltic pump was used only for the transfer of must, wine, sparkling wines, whole grapes and destemmed grapes, i.e. only liquids and solids. The intuition underlying the invention is to use the peristaltic pump to pump gases generated by fermentation.

In particular, the pumped gas comprises or consists of CO₂ generated by fermentation of a vegetable product.

When the peristaltic pump is used for the pumping and/or the compression of CO₂, the peristaltic pump has significant advantages. Indeed, the compression of fermentation CO₂ is a very critical step. The fermentation CO₂ is moist and full of sugars, therefore capable of clogging pistons, blades, etc. of normal compressors, which would ordinarily require the additional step of purifying the CO₂ supplied to the compressor. The peristaltic pump avoids this additional step.

Moreover, all the known compressors work with mechanical components in oil bath, which requires expensive and bulky filters to remove the oil which inevitably ends up in the compressed CO₂. All this, in addition to representing a huge cost, distorts the very characteristics of the CO₂ produced during the fermentation process, which is full of aromas and natural substances linked to the fermentation.

The peristaltic pump does not work with oil, and allows doing without the input and output pump filters to filter the fermentation CO₂.

Preferably the method envisages to
store the crushed product in a first tank to make it ferment therein; and
mechanically pump the gaseous products generated in the first tank inside a second tank via a peristaltic pump.

By means of the pumping of the gas it is possible, for example, to store the gas in cylinders or transfer it elsewhere to perform oenological processing.

The method also allows improving the method of EP 20 58 384, with the steps of
(i) storing the crushed material in a first tank to make it ferment therein and form a cap of solid parts floating on a liquid mass;
(ii) connecting a second tank to the first to capture in it gaseous fermentation products by pumping via the peristaltic pump the gaseous products generated in the first tank inside the second tank;
(iii) connecting the second tank to the first at a point under the cap so that, thanks to the pressure differential between the two tanks, the spontaneous transfer of gaseous products into the liquid mass occurs, so that while going up they strike the cap.

By increasing the pressure in the second tank via the peristaltic pump, at the time of gas injection the disruptive effect of the gas on the cap and in the liquid contained in the first tank increases.

According to a preferred step, the gaseous products generated in the first tank are mechanically pumped by the peristaltic pump inside an isolated storage container.

According to a preferred step, the type of gas, for example CO₂ or atmospheric air, present in the first tank is detected and the pump is controlled in relation to the type of gas detected inside the first tank.

The method of the invention can be carried out with an apparatus such as in claim 7. The preferred variants, single or combined, of the apparatus are listed in the dependent apparatus claims.

The apparatus for the treatment of a vegetable material, e.g. in form of a crushed material, useful for carrying out the method of one of the previous claims, comprises
- a tank for containing the vegetable material to generate gaseous products from the fermentation of the vegetable product, and
- a peristaltic pump connected to the tank to pump gas generated by the fermentation of the vegetable material towards the outside of the tank.

In a variant, the apparatus also comprises
- a first tank for containing the vegetable material to generate gaseous products from the fermentation of the vegetable product,
- a second tank for collecting said gaseous products;
- a first pipe system adapted to put a part of the first tank, where the gaseous products accumulate, into communication with the second tank so that the gaseous products can be transferred into the second tank,
- a second pipe system adapted to put the second and the first tank into communication, the system having an outlet in the first tank where in use there is the liquid mass of the crushed product,
- first and second valve means associated respectively with the first and second pipe system to make the two tanks selectively communicating conditionally to the open/closed state of said means;
- a peristaltic pump connected between the tanks to pump gas generated by the fermentation of the vegetable product from the first tank to the second tank.

In a variant, the apparatus comprises third valve means for venting the first tank towards the outside.

In particular, the apparatus comprises a computer device programmed to manage the functions thereof. E.g. the computer device is programmed to decrease the gas pressure in the first tank by operating the third valve means; and/or
the computer device is interfaced with a pressure sensor adapted to measure the gas pressure in the first tank, and/or a pressure sensor adapted for measuring the pressure of the gas present in the second tank; and/or
the computer device is programmed to control the gaseous pressure in the second tank via the relative sensor and drive the opening of the second valve means when said pressure reaches or exceeds a pre-established threshold; and/or
the computer device is programmed to control the gaseous pressure in the first tank through the relative sensor and drive the deactivation of the pump when such pressure falls below a predetermined threshold; and/or
the second tank is a partition of the internal volume of the first tank.

Another aspect of the invention is the use of a peristaltic pump for pumping gas generated by fermentation of a vegetable product, e.g. in the form of a crushed product. The aspect of the invention concerning said use shares all the variants described for the method.

The invention will now be described in detail with reference to the annexed drawing, which illustrates a preferred use of the peristaltic pump, wherein
fig. 1 shows a preferred embodiment for a winemaking apparatus,
fig. 2 shows a preferred embodiment for several winemaking apparatuses.

A winemaking apparatus 50 for a crushed vegetable composed of must 90 and peel 92 is constituted of a casing 52 supported by optional legs 54. The fermenting must 90 produces a floating cap 92 of marc and/or solid parts, composed of the skins that, pushed by the fermentation CO₂, float.

The upper part or roof 55 of the tank 50 can be connected selectively, through a duct 66 and a valve 70, to an external gas accumulation tank 30. On the duct 66 there is also a peristaltic pump or compressor 68. The peristaltic pump 68 has the function of pumping into the tank 30 fermentation gases generated in the tank 50, causing the gas pressure in the tank 30 to be higher than that in the roof 55 of the tank 50.

The tank 30 can in turn be selectively connected to the lower part of the tank 50 via a duct 76 and a valve 78. The duct 76 has an end segment 79 which penetrates inside the housing 52, so as to inject the gas at the center of the volume of the must.

The ducts 76 and the valves 78 can be more than one for the fermentation tank 50, in order to have more gas injection points into the must 90. This is particularly advantageous for fermentation tanks of large capacity.

The length of the segment 79 is not essential. It is enough that, during the method steps, the section 79 is always kept, also taking into account the foreseen level of the must 90, under the cap 92. At the end of the duct 76 it is possible, however, to install an adaptive control system, e.g. a telescopic duct 79 controllable from the outside to adjust the height of the outlet.

The system preferably also comprises an electronic device EU, e.g. a PLC, which is connected (see the arrows in the figure indicating electrical signal lines) to:
a pressure sensor 80, which measures the gas pressure in the higher and empty part of the tank 50. Such pressure sensor can be advantageously replaced or assisted also by a sensor that detects the type of gas, for example CO₂ or atmospheric air, and therefore to control the pump in relation to the type of gas detected inside the tank 50. In a variant there can be added to the pressure sensor also the sensor detecting the type of gas present in the fermentation tank 50, or simply there may be provided a timer-operated timed switching on and off for the CO₂ suction pump, and
a pressure sensor 84, which measures the gas pressure present in the tank 30,
an (optional) bleed valve 60, mounted to reduce the pressure of the gas in the tank 50,
the pump or compressor 68,
a valve 94, which controls the flow in a duct 98 which supplies, from an inert gas reserve, the tank 30, and
a valve 96, which controls the flow in a duct 99 which supplies, from a reserve of compressed air, the tank 30, and
the valve 78,
the valve 70 (optional) to allow the gas flow from the tank 50 to the tank 30.

The valve 70 is e.g. of the "opened/closed" type, and it could be replaced by a non-return valve, or simply also omitted if the pump 68 is hermetically airtight and prevents gas reflux from the tank 30 to the fermentation tank 50.

The operation of the winemaking apparatus 50 can follow these preferred steps (preferably performed via software by the EU device):
(i) The tank 50 is filled with must 90.
(ii) After a certain time the must 90 upon fermenting generates gas and a solid cap 90. Valve 70 is controlled open, valve 60 and valve 78 are closed.
(iii) The pump 68 is activated to transfer an excess of fermentation gas into the tank 30.
(iv) After a pre-set time, or after the desired pressure is reached inside the tank 30, the pump 68 is stopped, and valve 70 is closed. The gas remains trapped under pressure in the tank 30, while the other tank 50 is depressurized (or degassed) by opening the valve 60.
   The valve 60 may also adjust the pressure at the top of the tank 50. In this case it will act as a maintenance valve for the desired pressure in the tank 50.
(v) The valve 78 is opened and the gas spontaneously flows into the must 90 due to the pressure differential between the pressure existing in the tank 30 and the hydrostatic head (plus possible gas pressure in the upper part of the tank 50) present at the injection point 79 internal to the same tank 50. The gas injected under pressure rises into the must 90 and interacts with both the must 90 and the cap 92, mixing them, oxygenating them or inerting them (depending on the gases or mixtures used), and in some cases (this is a function of the volume of gas injected during a span of short time, however smaller than 60 seconds) breaking it.

The pump 68 allows obtaining a gas overpressure in the tank 30 compared to that reached by fermentation alone. The overpressure is such as to exceed the value of the hydrostatic head plus the gas pressure in the tank 50 at the injection point. It also allows collecting, by storing it, a huge quantity of CO₂ fermentation gas, a quantity depending on the size of the tank 30 and the maximum pressure reachable both by the pump 68 and by the tank 30.

Given the overpressure of the gas in the tank 30 obtainable with the pump 68, the step of depressurizing (or degassing) the tank 50 by opening the valve 60 is not strictly necessary. However, such step is advantageous because it amplifies the power of the gas injected into the tank 50 since the gas pressure inside the tank 50 can be reduced at will, being able to be brought even at the ambient pressure level equal to relative "0" bar.

The advantage of the valve 60, when open, is allowing the outflow of the gas injected into the must 90 towards the outside of the fermentation tank 50, avoiding undesired overpressure in the tank 50.

Generally, the pump 68 has the advantage of ensuring high injection pressures for the gas even if the gas initially has little or insufficient pressure. This is the case, for example, of large-sized tanks, in which the hydrostatic head (the liquid column) that the injected gas must overcome is considerable.

Another advantage of the pump 68 is to allow the construction of fermentation tanks with relaxed specifications. It is not necessary that structurally the fermentation tank must withstand a very high internal gas pressure, the one needed to guarantee the gas injection, because the constraint moves to the tank 30, which is smaller and contains no liquid.

Another advantage of pump 68 is that it makes possible the storage at high pressure of large quantities of inert natural gas, also in containers other than the tank 30. The gas may also be used during, for example, the maceration phase of winemaking, where there is not CO₂ production, or during other phases of the wine production process (for example bottling) where presence of inert gas is required. In this case the gas stored from the fermentation process will come suitably purified from sugar residues or fermentative bacteria or humidity, and will be an important source of energy and economic savings for the winery.

Another advantage of the pump 68 is that it makes possible the pumping of the fermentation CO₂ without resorting to expensive and complex-maintenance pumps, thereby avoiding contamination of CO₂ by lubricating oil, and avoiding the use of filters for lubricating oil.

The process steps described above are preferably controlled by the EU device.

By reading and processing the data sent by the various sensors, the EU device can control the valves to perform the method steps when e.g. a maximum threshold pressure is reached in the tank 50 and/or 30.

Each step of the winemaking process of the invention may be advantageously automated and/or programmed with the EU device. This allows e.g. to set periodic cycles for mixing the fermenting mass and, perhaps, breaking the cap 92, and to program the parameters for gas release in the tank 50 (like the duration of single-discharge release or the duration of various consecutive pulses, the gas flow rate for each pulse, etc.).

The valves 94, 96 and the ducts 98, 99 are optional. But their presence is advantageous because by controlling the valves 94, 96 the gas in the tank 30 can be enriched with different gaseous components, to inject a suitable gas mixture into the tank 50 and favor a certain type of fermentation.

Even if the vent valve 60 is not present, in the tank 30 gas at a sufficiently high pressure can accumulate to nonetheless inject gas into the tank 50 in a turbulent manner.

The tank 30 may also be made internally or attached to the tank 50. E.g. the tank 30 can be a partition of the inner volume of the tank 50.

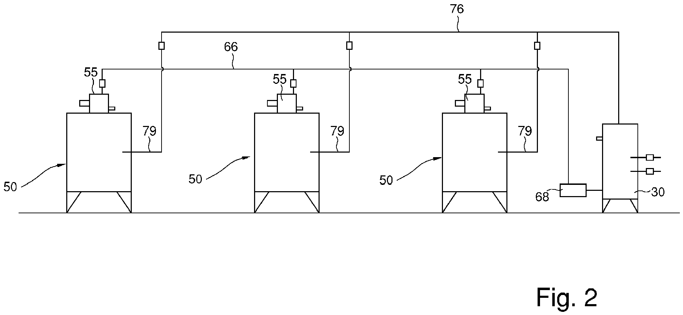

In a variant, see fig. 2, the tank 30 can be connected to receive gas from, and/or send gas to, two or more tanks 50. Thus the tank 30 can receive and store pressurized gas from each tank 50 and/or send pressurized gas into each tank 50.

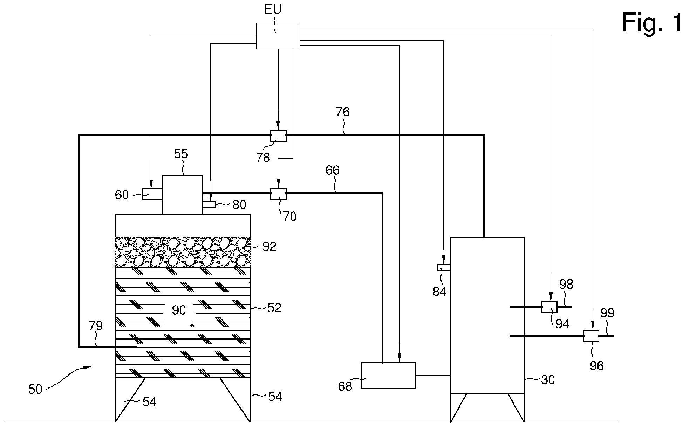

In fig. 2 identical numerical references indicate equal parts, and for sake of simplicity the EU control unit and the relative connections have been omitted. Each tank 50 operates with respect to the common tank 30 as explained for fig. 1.

As a variant of the system, the pump 68 can be used to store pressurized CO₂ in cylinders.

## Claims

1. Method for the treatment of a vegetable product, e.g. in the form of a crushed material, comprising the step of pumping by means of a peristaltic pump (68) gas generated by fermentation of the vegetable product.

2. Method according to claim 1, with the steps of
(i) storing the vegetable product in a first tank (50) to make it ferment and form therein a cap (92) of solid parts floating on a liquid mass (90);
(ii) connecting a second tank (30) to the first to capture gaseous fermentation products generated in the first tank by pumping the gaseous products into the second tank (30) by means of the peristaltic pump;
(iii) connecting the second tank (30) to the first (50) at a point under the cap so that, thanks to the pressure differential between the two tanks, the spontaneous transfer of the gaseous products into the liquid mass occurs, so that while going up they strike the cap.

3. Method according to claim 1 or 2, wherein in step (iii) the gaseous pressure in the first tank (50) is decreased, e.g. up to room pressure or at a pressure value intermediate between that of the second tank and room pressure.

4. Method according to any one of the preceding claims, wherein the gaseous pressure in the first tank (50) is controlled, and the gaseous products generated in the first tank (50) are pumped into the second tank (30) when the gaseous pressure in the first tank exceeds a certain pressure threshold and/or until the gaseous pressure in the first tank drops below a certain threshold pressure.

5. Method according to any one of the preceding claims, wherein the gaseous pressure is controlled in the second tank (30) and step (iii) is carried out when said pressure exceeds a predetermined threshold.

6. Method according to any of the previous claims 2 to 5, wherein the type of gas present in the first tank is detected and the pump (68) is controlled in relation to the type of gas detected inside the first tank.

7. Apparatus for the processing of a vegetable product, e.g. in the form of crushed material, useful for carrying out the method of one of the preceding claims, comprising
- a tank (50) for containing the vegetable product (90; 92) in order to generate gaseous products from the fermentation of the vegetable product,
- a peristaltic pump (68) connected to the tank to pump gas generated by the fermentation of the vegetable product towards the outside of the tank.

8. Apparatus according to claim 7, comprising
- a first tank (50) for containing the vegetable product (90; 92) in order to generate gaseous products from the fermentation of the vegetable product,
- a second tank (50) for collecting said gaseous products;
- a first pipe system (66) adapted to put into communication a part (55) of the first tank (50), where the gaseous products accumulate, with the second tank (30) so that the gaseous products can be transferred into the second tank (30),
- a second pipe system (76) adapted to connect the second (30) and the first tank (50), the system having an outlet (79) in the first tank (50) where in use the liquid mass of the crushed material is,
- first and second valve means (70, 78) respectively associated with the first and second pipe system (66, 76) for making selectively communicating the two tank (30, 50) conditionally to the open/closed state of said means;
- a peristaltic pump (68) connected between the tanks to pump gas generated by the fermentation of the vegetable product from the first tank to the second tank.

9. Use of a peristaltic pump (68) to pump gas generated by the fermentation of a vegetable product, e.g. in the form of crushed material.

10. Use according to claim 9, wherein the peristaltic pump (68) is used to pump gas, generated inside a first tank thanks to the fermentation of the vegetable product, from the first tank to a second gas-collecting tank.
